# EUROPÄISCHE PATENTANMELDUNG

(11) **EP 4 015 831 A1**
(43) Veröffentlichungstag der Anmeldung: **22.06.2022**
(21) Anmeldenummer: 20215312.8
(22) Anmeldetag: 18.12.2020
(51) Int. Cl.: F04D 17/06, F04D 17/12, F04D 29/42, F04D 29/44

(54) **RADIALTURBOMASCHINE, INSBESONDERE VERDICHTER**

(71) Anmelder: Siemens Energy Global GmbH & Co. KG, 81739 München (DE)
(72) Erfinder: Jonen, Werner, 47051 Duisburg (DE)

(57) **Zusammenfassung**

Verdichter (1) umfassend einen um eine Rotationsachse (2) drehbar gelagerten Rotor (3),
einen um den Rotor (3) angeordneten Stator (4),
wobei ein Strömungskanal (5) zwischen dem Stator (4) und dem Rotor (3) ausgebildet ist,
mit einem Strömungseinlass (6), der zum im Wesentlichen axialen Zuströmen eines Strömungsfluides in einen ersten Verdichtungsabschnitt (7), der zum Verdichten des Strömungsfluides ausgebildet ist,
wobei der erste Verdichtungsabschnitt (7) auf dem Rotor (3) angeordnete erste Laufschaufeln (8) aufweist,
wobei der erste Verdichtungsabschnitt (7) derart ausgebildet ist, dass ein in einer Strömungsrichtung (9) strömendes Strömungsfluid aus einer axialen Richtung (10) in eine von der Rotationsachse (2) weg weisende radiale Richtung (11) und anschließend wieder in die axiale Richtung (10) umlenkbar ist, ferner umfassend einen Umlenkabschnitt (12), der in der Strömungsrichtung (9) gesehen nach dem ersten Verdichtungsabschnitt (7) angeordnet ist,
wobei der Umlenkabschnitt (12) derart ausgebildet ist, dass ein in der Strömungsrichtung (9) strömendes Strömungsfluid aus der axialen Richtung (10) in eine zur Rotationsachse (2) hin weisende radiale Richtung (11) und anschließend wieder in die axiale Richtung (10) umlenkbar ist.

## Beschreibung

Die Erfindung betrifft einen Verdichter umfassend einen Rotor und einen Stator, wobei der Rotor um eine Rotationsachse drehbar gelagert ist, wobei der Stator um den Rotor angeordnet ist, wobei ein Strömungskanal zwischen dem Stator und dem Rotor angeordnet ist, ferner umfassend einen Strömungseinlass ausgebildet zum Zuführen eines Strömungsfluides, einen ersten Verdichtungsabschnitt und einen nach dem Verdichtungsabschnitt angeordneten Umlenkabschnitt.

Verdichter sind Maschinen, die einem eingeschlossenen Gas mechanische Arbeit zuführen, wobei Verdichter zum Komprimieren von Gasen eingesetzt werden. Der Druck und die Dichte des Gases werden dabei erhöht. Ein anderer Begriff für Verdichter ist Kompressor.

Verdichter können unter anderem als so genannte Getriebeverdichter oder einwellige Radialverdichter ausgebildet werden. Es sind noch weitere Ausführungsformen von Verdichtern bekannt. So sind zum Beispiel Axialverdichter bekannt.

Neben den Verdichtern sind auch allgemein Turbomaschinen bekannt, die auch als Radialturbomaschinen ausgebildet sein können. Radialturbomaschinen sind entweder als Radialturboverdichter oder Radialturboexpander bekannt. Die nachfolgenden Ausführungen beziehen sich - wenn nicht anders angegeben - auf die Ausführung als Verdichter. Die Erfindung ist für Expander bzw. Turbinen grundsätzlich genauso anwendbar, wie für Verdichter, wobei ein Radialturboexpander gegenüber einem Radialturboverdichter im Wesentlichen eine umgekehrte Strömungsrichtung des Strömungsfluides vorsieht.

Das globale Marktumfeld fordert Turbomaschinen mit niedrigen Investitionskosten. Zur Kostensenkung ist es besonders effektiv die Maschinen kompakter zu gestalten. Dabei kommt es insbesondere darauf an, den benötigten radialen oder axialen Bauraum zu reduzieren. Diese Maßnahme geht in der Regel mit einer Wirkungsgradverschlechterung einher.

Die Aufgabe einer Radialverdichterstufe ist es im Allgemeinen dem Strömungsfluid bei höchstmöglicher Effizienz Energie zuzuführen und diese in Druck umzuwandeln. Bei den meisten Strömungsmaschinen sind um die angestrebte Druckerhöhung zu erreichen, mehrere Stufen bestehend aus Laufrad und Statorkomponenten notwendig. Es ist naheliegend, dass eine Strömungsmaschine umso günstiger gebaut werden kann, je weniger Stufen für die angestrebte Druckerhöhung eingesetzt werden. Daher sollte die Energiedichte pro Stufe bei akzeptablen Effizienzwerten maximiert werden. Dies könnte beispielsweise durch die Erhöhung der Drehzahl bzw. Umfangsgeschwindigkeit erfolgen.

Allerdings könnten zu hohe Geschwindigkeiten zu nicht mehr akzeptablen Mach-Zahlen des Strömungsfluides führen. Des Weiteren könnten zu hohe Geschwindigkeiten die maximale mechanische Belastbarkeit der rotierenden Komponenten erreichen.

Davon ausgehend hat es sich die Erfindung zur Aufgabe gemacht, die Kompaktheit zu verbessern, ohne die Aerodynamik unverhältnismäßig zu verschlechtern.

Gelöst wird diese Aufgabe durch einen Verdichter umfassend einen um eine Rotationsachse drehbar gelagerten Rotor, einen um den Rotor angeordneten Stator, wobei ein Strömungskanal zwischen dem Stator und dem Rotor ausgebildet ist, mit einem Strömungsfluideinlass, der zum im Wesentlichen axialen Zuströmen eines Strömungsfluides in einen ersten Verdichtungsabschnitt, der zum Verdichten des Strömungsfluides ausgebildet ist, wobei der erste Verdichtungsabschnitt auf dem Rotor angeordnete erste Laufschaufeln aufweist, wobei der erste Verdichtungsabschnitt derart ausgebildet ist, dass ein in einer Strömungsrichtung strömendes Strömungsfluid aus einer axialen Richtung in eine von der Rotationsachse weg weisende radiale Richtung und anschließend wieder in die axiale Richtung umlenkbar ist, ferner umfassend einen Umlenkungsabschnitt, der in der Strömungsrichtung gesehen nach dem ersten Verdichtungsabschnitt angeordnet ist, wobei der Umlenkungsabschnitt derart ausgebildet ist, dass ein in der Strömungsrichtung strömendes Strömungsfluid aus der axialen Richtung in eine zur Rotationsachse hin weisende radiale Richtung und anschließend wieder in die axiale Richtung umlenkbar ist.

Die Begriffe axial, radial, tangential, Umfangsrichtung und ähnliche sind vorliegend - wenn nicht anders angegeben - jeweils auf die zentrale Achse bezogen, um die sich die Strömungsführung ringförmig erstreckt. Diese Achse ist bei einer Radialturbomaschine bzw. bei einem Verdichter auch die Rotationsachse eines Rotors bzw. der Welle mit den Laufrädern. Die Strömungsführung lenkt das Prozessfluid bogenförmig um, so dass bezüglich der Umlenkung der Begriff "radial" sich nicht auf die zentrale Achse bezieht, sondern auf die Biegung bzw. Krümmung der Umlenkung selbst.

Ein zu führendes Prozessfluid ist in der Regel das Strömungsfluid, das von der entsprechenden Turbomaschine bzw. Radialturbomaschine befördert wird oder das dem Betrieb der Turbomaschine im Wesentlichen als Antrieb oder Abtrieb dient. Das zu führende Prozessfluid ist hierbei das Medium, das hauptsächlich entweder signifikant technische Arbeit abgibt oder aufnimmt.
Unter dem Begriff "in einem Betrieb" versteht die Erfindung den Zustand des Betriebs der entsprechenden Maschine bzw. Turbomaschine, währenddessen sich beispielsweise der Rotor der Maschine dreht und eine Übertragung von technischer Arbeit auf das Strömungsfluid oder von dem Strömungsfluid fort erfolgt.

Unter einer Laufschaufel versteht die Erfindung eine rotierende Beschaufelung. Eine derartig rotierende Beschaufelung kann als ein Laufrad ausgebildet sein, das beispielsweise auf eine Welle aufgeschrumpft ist. Alternativ ist es möglich, dass die Laufstufe aus einzelnen Schaufeln besteht, die entweder an einer Welle eines Rotors angebracht sind oder sogar einstückig mit dem Rotor bzw. der Welle ausgebildet sind.

Unter einer Leitschaufel versteht die Erfindung eine statische Beschaufelung. Eine derartig statische Beschaufelung kann als ein Leitschaufelkranz ausgebildet sein, das beispielsweise auf dem Innenbereich eines Gehäuses angebracht ist.

Mit der Erfindung wird somit der im Durchmesser enorm Raum beanspruchende klassische Rückführkanal eines mehrstufigen Einwellen-Radialverdichters durch eine wesentlich kompaktere Bauweise ersetzt. Mit anderen Worten wird ein "birnenförmiger" Rückführkanal in Kombination mit einem axial abströmenden Radiallaufrad vorgeschlagen. Erfindungsgemäß kann die Anordnung für mehrstufige Einwellenradialverdichter übernommen werden.

Gemäß der Erfindung wird vorgeschlagen offene Laufräder einzusetzen, dessen Nabenkontur auch gleichzeitig der Wellenkontur entspricht. Das bedeutet, dass die Laufräder dadurch keine strömungsbenetzte äußere Radscheibe haben. Die offene Bauweise erlaubt höhere Umfangsgeschwindigkeiten, sodass bei einer gegebenen Verdichtungsaufgabe weniger Stufen realisiert werden kann als üblicherweise mit geschlossenen Laufrädern.

Gemäß der Erfindung wird vorgeschlagen rückwärts gekrümmte Laufschaufeln im Laufradaustritt einzusetzen. Gleichermaßen sind auch die Rückführbeschaufelungen im kompakten bowlshaped Rückführkanal gegenüber der rotierenden Wellenkontur offen, das bedeutet ohne eine Art Stator-Deckkontur, ausgeführt. Durch die besondere Art der Rotor-Stator-Gestaltung sind keinerlei sonst übliche Dichtungselemente, zum Beispiel Labyrinthe an der Deckscheibe oder an der Laufradrückseite zwischen den Laufrädern, notwendig. Dadurch werden weitere Kosten gespart.

Die erfindungsgemäße Stufenanordnung kann besonders vorteilhaft in Verbindung mit einer axialen Zuströmung zum Verdichter sowie einer kompakten Spirale angewendet werden. Die Spirale kann nach außen gewickelt ausgebildet werden, wobei deren Querschnitte zur Wellenachse hin orientiert sind.

Gemäß der Erfindung bietet sich besonders an, die axiale Anströmung mit verstellbarem Eintrittsleitgitter auszubilden.

Gemäß der Erfindung ist die Radialstufe derart ausgebildet, dass das Radiallaufrad nicht radial, sondern axial abströmt und ohne den typischen Radialdiffusor unmittelbar zu dem Leitrad der ersten Axialstufe strömt.

Die Rotorbeschaufelung kann austrittsseitig so ausgelegt werden, dass ein gewisser Restdrall für die Verwendung einer kompakten Spirale verbleibt oder aber eine drallfreie Abströmung für ein Austrittsgehäuse resultiert.

Die Laufschaufeln können integraler Bestandteil des Rotors sein, was durch additive Fertigungsmethoden erreicht werden kann.

Erfindungsgemäß wird somit ein Stufenkonzept vorgeschlagen, welches, wenn die Mach-Zahlen im Strömungsgebiet sehr gering sind und die mechanische Belastbarkeit die Drehzahl limitiert, die Energiedichte pro Stufe deutlich erhöhen kann.

Vorteilhafte Weiterbildungen sind in den Unteransprüchen angegeben.

In einer vorteilhaften Weiterbildung sind im Umlenkabschnitt Leitschaufeln angeordnet.

In einer weiteren vorteilhaften Weiterbildung sind die Leitschaufeln am Stator angeordnet.

In einer vorteilhaften Weiterbildung weist der erste Verdichtungsabschnitt in der Strömungsrichtung gesehen einen ersten Laufschaufelabschnitt umfassend auf dem Rotor angeordnete erste Laufschaufeln einen Laufschaufelabschnitt umfassend auf dem Stator angeordnete Zwischenleitschaufeln und einen zweiten Laufschaufelabschnitt umfassend auf dem Rotor angeordnete zweite Laufschaufeln auf.

Dadurch wird erreicht, dass das Geschwindigkeitsniveau stromab Strom ab des Radiallaufrades gesenkt wird (C2/U2 = 0,45). Gleichzeitig wird die vergleichbare spezifische Stufendruckerhöhung um etwa 20 % erhöht.

Die ersten Laufschaufeln sind als klassische Diagonallaufräder ausgebildet. Die Zwischenleitschaufel ist dadurch charakterisiert, dass sie die mit Mitdrall geprägte Strömung in die Gegenrichtung (gegen die Rotationsrichtung) umlenkt und somit einen signifikanten Gegendrall vor der zweiten Laufschaufel erzeugt.

Durch den ausgeprägten Gegendrall leistet die zweite Rotorbeschaufelung eine deutlich größere spezifische Stufendruckerhöhung als die erste Rotorbeschaufelung.

In einer vorteilhaften Weiterbildung ist der Rotor mit einem Hohlraum ausgebildet.

In einer vorteilhaften Weiterbildung sind die Zwischenleitschaufeln als Impuls-Leitschaufeln ausgebildet.

In einer vorteilhaften Weiterbildung weist der erste Verdichtungsabschnitt und der Umlenkabschnitt eine Länge von L auf, ferner wird ein Strömungskanal-Durchmesser D gebildet von der Rotationsachse in radialer Richtung zur Mitte des Strömungskanals zwischen dem ersten Verdichtungsabschnitt und dem Umlenkabschnitt, wobei gilt: 0,6 < L/D < 0,9 oder 0,65 < L/D < 0,85 oder 0,7 < L/D < 0,8, insbesondere L/D = ca. 0,75.

Im Folgenden ist die Erfindung anhand spezieller Ausführungsbeispiele unter Bezugnahme auf Zeichnungen näher erläutert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßstäblich darstellen, vielmehr ist die Zeichnung, wo zur Erläuterung dienlich, in thematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1:: ein Ausschnitt eines erfindungsgemäße Verdichters,
- Figur 2:: ein Ausschnitt eines erfindungsgemäße Verdichters in einer alternativen Ausführungsform,
- Figur 3: eine Ausschnitt des Verdichters nach Figur 2.

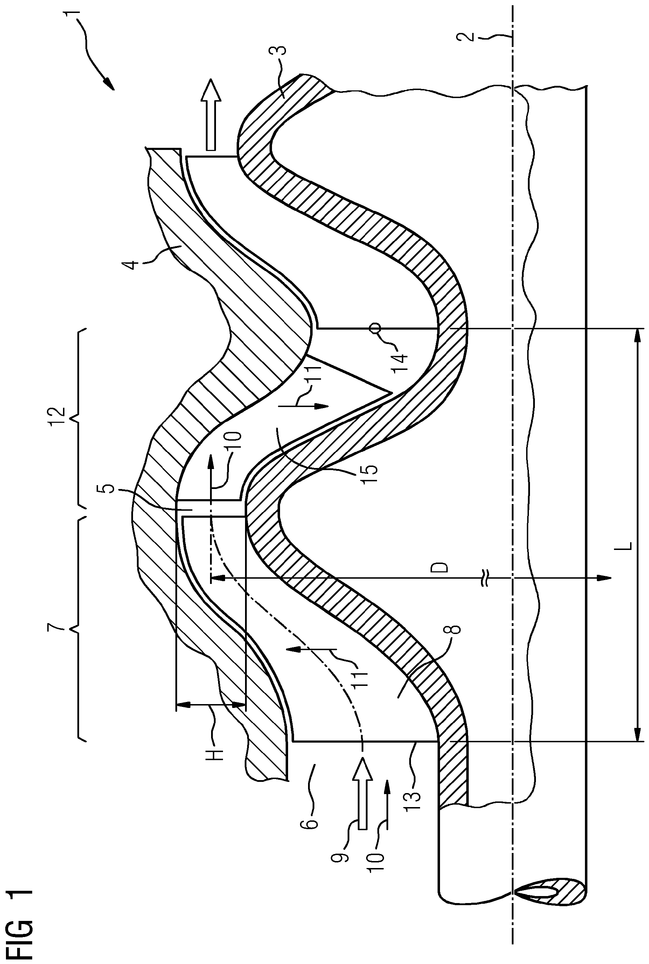

Die Figur 1 zeigt einen Ausschnitt eines erfindungsgemäßen Verdichters 1. Der Verdichter 1 umfasst einen um eine Rotationsachse 2 drehbar gelagerten Rotor 3. Um den Rotor 3 ist ein Stator 4 angeordnet. Zwischen dem Stator 4 und dem Rotor 3 ist ein Strömungskanal 5 ausgebildet.

Des Weiteren umfasst der Verdichter 1 einen Strömungseinlass 6, der zum Zuführen eines Strömungsfluides im Betrieb ausgebildet ist. Im Betrieb wird der Rotor 3 mit einer nicht näher dargestellten Antriebsmaschine, beispielsweise einer Dampfturbine, Drehmoment übertragend gekoppelt und rotiert im Betrieb um die Rotationsachse 2.

Nach dem Strömungseinlass 6 strömt das Strömungsfluid durch einen ersten Verdichtungsabschnitt 7. Der Verdichtungsabschnitt 7 ist zum Verdichten des Strömungsfluides ausgebildet. Der Druck des Strömungsfluides wird im Verdichtungsabschnitt 7 erhöht. Dazu weist der Verdichtungsabschnitt 7 erste Laufschaufeln 8 auf, die auf dem Rotor 3 angeordnet sind. Der erste Verdichtungsabschnitt 7 ist dabei derart ausgebildet, dass ein in einer Strömungsrichtung 9 strömendes Strömungsfluid aus einer axialen Richtung 10 in eine von der Rotationsachse 2 weg weisende radialer Richtung 11 und anschließend wieder in die axiale Richtung 10 umlenkbar ist.

Mehrere über den Umfang des Rotors 3 verteilte erste Laufschaufeln 8 bilden ein Laufrad. Eine andere Bezeichnung für das Laufrad ist Impeller.

Der Verdichter 1 umfasst ferner einen an dem ersten Verdichtungsabschnitt 7 anschließenden Umlenkabschnitt 12. Der Umlenkabschnitt 12 ist in der Strömungsrichtung 10 gesehen nach dem ersten Verdichtungsabschnitt 7 angeordnet.

Der Umlenkabschnitt 12 ist derart ausgebildet, dass das in der Strömungsrichtung 10 strömendes Strömungsfluid aus der axialen Richtung 10 in eine zur Rotationsachse 2 hin weisende radiale Richtung 11 und anschließend wieder in die axiale Richtung 10 umlenkbar ist.

Nach dem Umlenkabschnitt 12 strömt das Strömungsfluid in einen nicht näher dargestellten Abströmbereich und von dort aus dem Verdichter 1 in nicht näher dargestellter Weise heraus. Die ersten Laufschaufeln 8 weisen eine im Wesentlichen senkrecht zur Rotationsachse 2 ausgebildete Laufschaufeleintrittskanten 13 auf.

Nach dem Umlenkabschnitt 12 wird das Strömungsfluid aus einer radialen Richtung 11 in eine axiale Richtung 10 umgelenkt. Die Umlenkung des Strömungsfluides in die axiale Richtung 10 erfolgt am Umlenkungspunkt 14. Der Abstand zwischen der Laufschaufeleintrittskante 13 und dem Umlenkungspunkt 14 ist L.

Zwischen dem ersten Verdichtungsabschnitt 7 und dem Umlenkabschnitt 12 weist der Strömungskanal 5 eine Höhe H auf. Von der Rotationsachse 2 bis zur Hälfte der Höhe H des Strömungskanals 5 wird ein Strömungskanal-Durchmesser D gebildet. Es gilt:
0,6 < L/D < 0,9 oder 0,65 < L/D < 0,85 oder 0,7 < L/D < 0,8, insbesondere L/D = ca. 0,75.

Im Umlenkabschnitt 12 sind Leitschaufeln 15 angeordnet. Diese Leitschaufeln 15 sind am Stator 4 angeordnet.

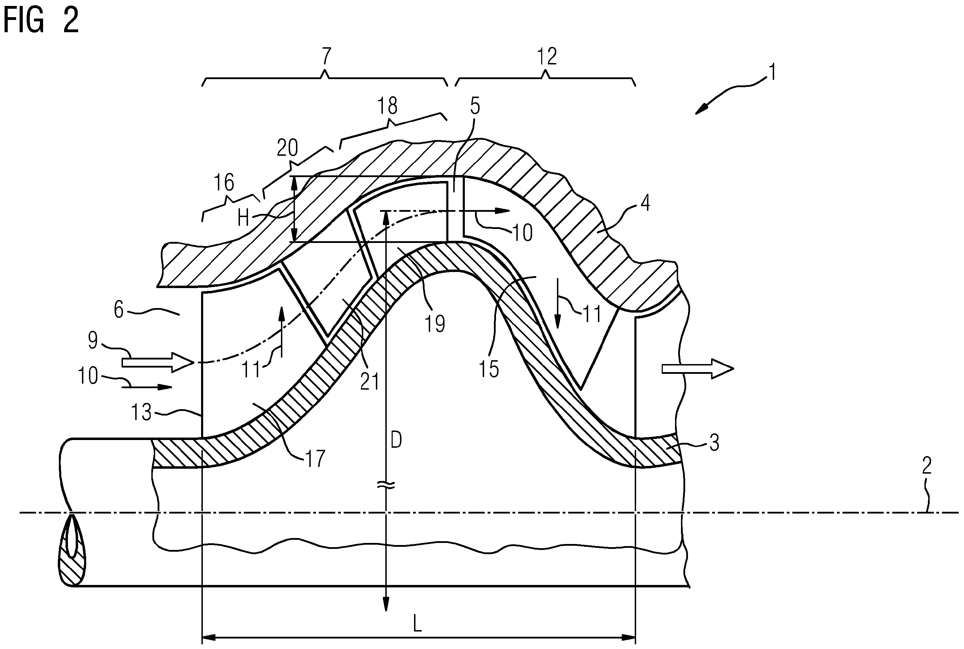

Die Figur 2 zeigt eine alternative Ausführungsform des Verdichters 1. Der Verdichter 1 ist im Wesentlichen identisch aufgebaut zu dem Verdichter 1 gemäß Figur 1.

Der erste Verdichtungsabschnitt 7 weist einen ersten Laufschaufelabschnitt 16 umfassend auf dem Rotor 3 angeordnete erste Laufschaufeln 17 auf.

Der erste Verdichtungsabschnitt 7 weist des Weiteren einen zweiten Laufschaufelabschnitt 18 umfassend auf dem Rotor 3 angeordnete zweite Laufschaufeln 19 auf.

Zwischen dem ersten Laufschaufelabschnitt 16 und dem zweiten Laufschaufelabschnitt 18 ist ein Leitschaufelabschnitt 20 umfassend auf dem Stator 4 angeordnete Zwischenleitschaufeln 21 angeordnet.

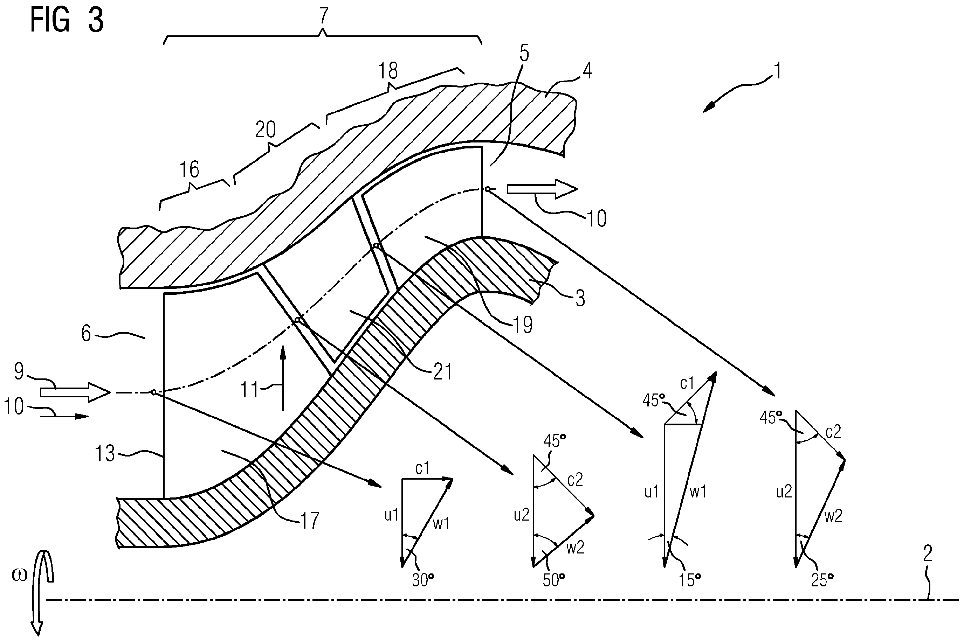

Die Figur 3 zeigt einen vergrößerten Ausschnitt des Verdichters 1 aus der Figur 2. In der Figur 3 sind Geschwindigkeitsdreiecke dargestellt. Der erste Verdichtungsabschnitt 7 wird gemäß diesen Geschwindigkeitsdreiecken ausgebildet. Das bedeutet, dass die ersten Laufschaufeln 17, die Zwischenleitschaufeln 21 und zweiten Laufschaufeln 19 so ausgebildet sind, dass im Betrieb die Geschwindigkeitsdreiecke entstehen, wie sie in der Figur 3 dargestellt sind an den verschiedenen Punkten im Strömungskanal 5.

Der Verdichter 1 ist mit einem Abströmabschnitt, der in Strömungsrichtung 9 gesehen nach dem Umlenkabschnitt 12 angeordnet ist ausgebildet. Der Abströmabschnitt ist hierbei spiralförmig in einer Umfangsrichtung ausgebildet.

Der Abströmabschnitt ist derart ausgebildet, dass das Strömungsfluid in Umfangsrichtung durch einen Abströmkanal umlenkbar ist, wobei der Abströmkanal einen Flächenquerschnitt aufweist, wobei der Flächenquerschnitt in der Umfangsrichtung größer kleiner wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verdichter (1)
umfassend
einen um eine Rotationsachse (2) drehbar gelagerten Rotor (3),
einen um den Rotor (3) angeordneten Stator (4), wobei ein Strömungskanal (5) zwischen dem Stator (4) und dem Rotor (3) ausgebildet ist,
mit einem Strömungseinlass (6), der zum im Wesentlichen axialen Zuströmen eines Strömungsfluides in einen ersten Verdichtungsabschnitt (7), der zum Verdichten des Strömungsfluides ausgebildet ist,
wobei der erste Verdichtungsabschnitt (7) auf dem Rotor (3) angeordnete erste Laufschaufeln (8) aufweist, wobei der erste Verdichtungsabschnitt (7) derart ausgebildet ist, dass ein in einer Strömungsrichtung (9) strömendes Strömungsfluid aus einer axialen Richtung (10) in eine von der Rotationsachse (2) weg weisende radiale Richtung (11) und anschließend wieder in die axiale Richtung (10) umlenkbar ist,
ferner umfassend einen Umlenkabschnitt (12), der in der Strömungsrichtung (9) gesehen nach dem ersten Verdichtungsabschnitt (7) angeordnet ist,
wobei der Umlenkabschnitt (12) derart ausgebildet ist, dass ein in der Strömungsrichtung (9) strömendes Strömungsfluid aus der axialen Richtung (10) in eine zur Rotationsachse (2) hin weisende radiale Richtung (11) und anschließend wieder in die axiale Richtung (10) umlenkbar ist.

2. Verdichter (1) nach Anspruch 1,
wobei im Umlenkabschnitt (12) Leitschaufeln (15) angeordnet sind.

3. Verdichter (1) nach Anspruch 2,
wobei die Leitschaufeln (15) am Stator (4) angeordnet sind.

4. Verdichter (1) nach Anspruch 1, 2 oder 3,
wobei der erste Verdichtungsabschnitt (7) in der Strömungsrichtung (9) gesehen einen ersten Laufschaufelabschnitt (16) umfassend auf dem Rotor (3) angeordneten ersten Laufschaufeln (8) einen Leitschaufelabschnitt (20) umfassend auf dem Stator (4) angeordnete Zwischenleitschaufeln (21) und einen zweiten Laufschaufelabschnitt (18) umfassend auf dem Rotor (3) angeordnete zweite Laufschaufeln (19) aufweist.

5. Verdichter (1) nach einem der Ansprüche 1 - 4, wobei der Rotor (3) einen Hohlraum aufweist.

6. Verdichter (1) nach einem der Ansprüche 1 - 5,
wobei die Zwischenleitschaufeln (21) als Impulsleitschaufeln ausgebildet sind.

7. Verdichter (1) nach einem der Ansprüche 1 - 6,
wobei der erste Verdichtungsabschnitt (7) und der Umlenkabschnitt (12) eine Länge von L aufweist, ferner mit einem Strömungskanal-Durchmesser D gebildet von der Rotationsachse (2) in radialer Richtung (11) zur Mitte des Strömungskanals zwischen dem ersten Verdichtungsabschnitt (7) und dem Umlenkabschnitt (12), wobei gilt: 0,6 < L/D < 0,9 oder 0,65 < L/D < 0,85 oder 0,7 < L/D < 0,8, insbesondere L/D = ca. 0,75.

8. Verdichter (1) nach einem der Ansprüche 1 - 7,
mit einem Abströmabschnitt, der in Strömungsrichtung (9) gesehen nach dem Umlenkabschnitt (12) angeordnet ist, wobei der Abströmabschnitt spiralförmig in einer Umfangsrichtung ausgebildet ist.

9. Verdichter (1) nach Anspruch 8,
wobei der Abströmabschnitt derart ausgebildet ist, dass das Strömungsfluid in Umfangsrichtung durch einen Abströmkanal einen Flächenquerschnitt aufweist, wobei der Flächenquerschnitt in der Umfangsrichtung größer wird.
